# EUROPÄISCHE PATENTSCHRIFT

(11) **EP 1 748 275 B1**
(45) Veröffentlichungstag und Bekanntmachung des Hinweises auf die Patenterteilung: **19.11.2008**
(21) Anmeldenummer: 06117888.5
(22) Anmeldetag: 26.07.2006
(51) Int. Cl.: G01B 3/11

(54) **Positionssensor mit Messseil**
Position sensor using a measuring rope
Capteur de position utilisant une corde d'arpentage

(30) Priorität: 10.08.2005 DE 102005037862; 26.07.2005 DE 102005034810
(43) Veröffentlichungstag der Anmeldung: 31.01.2007
(73) Patentinhaber: ASM Automation Sensorik Messtechnik GmbH, 85452 Moosinning (DE)
(72) Erfinder: Steinich, Klaus Manfred, 85604, Zorneding / Pöring (DE)
(74) Vertreter: Strych, Werner Maximilian Josef

(56) Entgegenhaltungen:
- EP-A1- 0 745 829
- EP-A2- 0 982 562
- DE-A1- 19 726 084
- US-A- 4 653 190

## Beschreibung

### I. Anwendungsgebiet

Die Erfindung betrifft einen Positionssensor, der nach dem Wegmessseil-Prinzip funktionieren.

### II. Technischer Hintergrund

Dabei wird ein meist nur einlagig auf einer Seiltrommel, die in die Aufwickelrichtung vorgespannt ist, aufgewickeltes Messseil abgezogen und die Umdrehungen bzw. Teilumdrehungen beim Abziehen mittels eines Drehsignals-Aufnehmers, meist eines Winkel-Aufnehmers, genau ermittelt.

Im Folgenden wird daher anstelle eines Drehsignal-Aufnehmers immer kurz von einem Winkel-Aufnehmer gesprochen, ohne die Erfindung hierauf zu begrenzen.

Um ein solchen gattungsgemäßen Positionssensor druckfest gegen einen äußeren Überdruck zu machen und damit auch einen Einsatz beispielsweise unter Wasser zu ermöglichen, besteht das Hauptproblem beispielsweise in dem zwangsläufig nicht dichten Seileinlauf in das Gehäuse.

Um einen solchen gattungsgemäßen Positionssensor auch in einer explosionsgefährdeten Umgebung einsetzen zu können, kann das Messseil und ebenso die Seiltrommel und der Seildurchlass aus einem nicht funkenerzeugenden Material, insbesondere Edelstahl, hergestellt werden, jedoch besteht nach wie vor die Gefahr einer Funkenbildung an den elektrischen Komponenten, also am Winkel-Aufnehmer oder der Auswerteelektronik.

Eine Funkenvermeidung auf mechanischem Wege könnte bei der Flachspiralfeder durchgeführt werden, ist jedoch sehr aufwändig.

Die Funkenvermeidung an den elektrischen Einheiten durch Beschränkung der Auswahl der elektrischen Komponenten auf solche mit so geringem Strom- und Spannungsbedarf, dass eine Funkenbildung nicht mehr möglich ist, würde zu einer schlechten Signalqualität führen.

Ein Unterbringen der potentiell Funken erzeugenden elektronischen und elektrischen Bauteile in einem Hohlraum und das Ausfüllen des verbleibenden Hohlraumes mit aushärtender Vergussmaße oder nicht aushärtendem Gel oder Schüttgut würde das Unterbringen der Flachspiralfeder in diesem Hohlraum verbieten.

Weiterhin ist es aus der DE 197 26 084 bekannt, einen Messseil-Wegsensor zur Verfügung zu stellen, der auch in einer Überdruck-Umgebung betrieben werden kann, jedoch nicht explosionssicher ist.

Bei diesem Sensor sind die Gehäuseräume, in denen sich die Spiralfeder und der Winkelaufnehmer befinden, nicht druckdicht mit dem Gehäuseraum der Seiltrommel verbunden.

### III. Darstellung der Erfindung

### a) Technische Aufgabe

Es ist daher die Aufgabe gemäß der Erfindung, einen Positionssensor nach dem Wegmessseilprinzip explosionssicher, auszubilden, ohne die bisher über Jahr-zehnte bewährten Konstruktionsprinzipien derartiger Sensoren verlassen zu müssen.

### b) Lösung der Aufgabe

Diese Aufgabe wird durch die Merkmale des Anspruchs 1 gelöst. Vorteil-hafte Ausführungsformen ergeben sich aus den abhängigen Ansprüchen.

Das Prinzip der Innen-druckfesten Kapselung als Explosionssicherung gemäß der europäischen Norm 50018 besteht darin, dass im Inneren der druckfesten Kapselung eine Explosion des dort Anfangs vorhandenen zündfähigen Gemisches in Kauf genommen wird, das Gehäuse jedoch so gestaltet ist, dass auch in diesem Fall kein zündfähiger Funke das Gehäuse nach außen durchdringen kann, indem die vorhandenen Spalte im Gehäuse zünddurchschlagsicher sind und das Gehäuse selbst ausreichend stabil gestaltet ist, so dass es auch durch den Druck der Exp-losion im Inneren sich nicht so verändert, dass die vorhandenen Spalte diese Zünddurchschlagsicherheit verlieren.

Dies wird vorliegend erreicht, indem die Wandungen stabil genug sind und die Spalte schmal und lang genug im Verhältnis zur Verformbarkeit der Wandungen.

Eine besonders einfache und dennoch druckfeste Konstruktion lässt sich erreichen, indem auf einen rohrförmigen Gehäusemantel Stirndeckel aufgesetzt werden, die dieses rohrförmige Gehäuseteil axial soweit überlappen, dass die axiale Länge des sich bildenden Ringspaltes dazwischen relativ zur Spaltbreite groß genug ist, um zünddurchschlagssicher zu sein.

Das Messseil und der Raum, in dem das Messseil auf der Seiltrommel aufgewickelt ist, sind wegen der Durchführung des Messseiles nach außen nur staubdicht, aber kaum druckdicht zu gestalten.

Eine Zünddurchschlagsicherheit von innen nach außen kann erreicht werden, indem der Ringspalt um das Messseil herum gegenüber dem Seilauslauf lang genug im Verhältnis zu seiner Breite ausgebildet wird, um die Zünddurchschlagsicherheit zu gewährleisten, weshalb der Seileinlauf vorzugsweise als radial abstehender Seileinlauf-Turm mit vergrößerter Länge konzipiert wird, indem dann zusätzlich noch eine oder mehrere Bürsten zur Reinigung des Messseiles angeordnet werden können. Diese müssen allerdings im Hinblick auf die Vermeidung von Funkenbildungen so ausgebildet sein, dass eine statische Aufladung gegenüber dem darauf schleifenden Seil vermieden wird.

Dadurch, dass jedoch alle anderen beweglichen und auch nicht beweglichen, jedoch Funken erzeugenden Bauteile, nämlich die Flachspiralfeder, der Winkel-Aufnehmer und ggf. die Auswerteelektronik in einem druckdichten Gehäuseteil angeordnet sind, welches so druckdicht gestaltet ist, dass es explosionssicher ist, muss lediglich bei den außerhalb dieses Gehäuses liegenden Teilen wie dem Messseil und der Seiltrommel konstruktiv eine Funkenvermeidung erreicht werden, beispielsweise durch Verwendung von Edelstahl und zusätzliche Kunststoffbeschichtung und generell der Vermeidung einer Reibung von Metall auf Metall.

Die explosionssichere Druckfestigkeit wird dabei insbesondere dadurch erreicht, dass auch die Welle, die von dem druckdichten Gehäuseteil hinüberführt in den nicht druckdichten Gehäuseteil, durch dieses Gehäuse explosionssicher hindurchführt ebenso wie ggf. das Kabel, welches aus dem druckdichten Gehäuse herausführt.

Auch eine kontaktlose Datenübertragung statt einer Kabeldurchführung ist hier denkbar. Dadurch kann, z.B. mittels elektromagnetischer Wellen, das Signal durch die geschlossene Gehäusewand übertragen werden, wodurch keinerlei Druck- oder andere Dichtigkeitsprobleme wie bei einer entsprechenden Kabeldurchführung an dieser Stelle auftreten können. Ebenso kann die Energieeinspeisung von außen in den Sensor hinein kontaktlos durch die geschlossene Gehäusewand hindurch, beispielsweise ebenfalls mittels elektromagnetischer Wellen erfolgen, so dass auch der Betrieb einer Auswerteelektronik innerhalb des Sensors ohne Stromzuführendes Kabel durch die Gehäusewand hindurch erfolgen kann.

Vorzugsweise wird das gesamte druckdichte Gehäuseteil, insbesondere das gesamte Gehäuse, aus den genannten Gründen aus Edelstahl bestehen.

Die Explosionssicherheit wird ferner dadurch erreicht, dass das druckfeste Gehäuse so stark dimensioniert ist, dass auch bei einer Explosion im Inneren sich das Gehäuse nicht so stark verformt, dass die Spalte, die aus dem Gehäuse herausführen, nicht mehr zünddurchschlagssicher wären. Insbesondere muss das druckfeste Gehäuse einen Überdruck von weit mehr als 100 bar aushalten können.

Wenn im folgenden von Druckfestigkeit die Rede ist, so muss - je nach Anwendungszweck, also hinsichtlich Druckfestigkeit gegen äußeren oder inneren Überdruck - dabei auch nach der Richtung des einwirkenden Druckes unterschieden werden, und dementsprechend verwendete Dichtelemente etc. für die jeweilige Druckrichtung vorhanden sein, bei Druckfestigkeit in beide Richtungen, also sowohl von innen nach außen als auch von außen nach innen, unter Umständen auch zwei Dichtelemente an der gleichen Dichtungsstelle eingesetzt werden, von denen jeweils eines in eine der Richtungen abdichtet.

Die Druckfestigkeit wird auf einfache Art und Weise erreicht, indem der Ringspalt zwischen Stirndeckel und Gehäusemantel als Verschraubung ausgebildet ist, und zusätzlich an einem Ende der axialen Erstreckung der Verschraubung eine Dichtung, vorzugsweise ein O-Ring, angeordnet ist. Die axiale Erstreckung lediglich des Gewindes, nicht auch des O-Ringbereiches, gilt dabei als Spaltlänge.

Durch diese Ausbildung kann der Stirndeckel mit einem großen Anzugsmoment gegen den Gehäusemantel vorgespannt werden, was zusammen mit einer ausreichenden Wandstärke der Gehäuseteile eine hohe Druckbelastbarkeit ergibt.

In einem der Stirndeckel ist vorzugsweise im Zentrum eine Durchgangsöffnung zum Einsetzen einer Kabeltülle vorhanden. Die Kabeltülle, die selbst zünddurchschlagssicher ausgebildet sein muss, muss wie beschrieben auch zünddurchschlagssicher montiert sein, also mit einer entsprechenden Relation von Spaltlänge zu Spaltbreite zum umgebenden Gehäuse.

Auch hier ist die Kabeltülle bevorzugt mittels eines Außengewindes in einem Innengewinde der Durchgangsöffnung verschraubt, wobei eine Dichtung am Ende des Gewindes angeordnet ist.

Im anderen Stirndeckel ist ebenfalls vorzugsweise zentral eine Durchgangsöffnung vorhanden, durch welche die Welle, die Spiralfeder und den Winkel-Aufnehmer drehfest mit der Seiltrommel verbindet, durch das Gehäuse hindurchführt. Auch hierbei ist die zünddurchschlagssichere Ausführung durch die Relationen von Länge zu Breite des um die Welle herum ausgebildeten Ringspaltes zu erreichen, wobei zusätzlich die Welle - vorzugsweise über ein Wälzlager - in dem gleichen Stirndeckel anschließend an den Ringspalt gelagert ist, wobei die axiale Länge der Lagerung jedoch nicht zur berücksichtigbaren Länge des Ringspaltes hinzugezählt werden darf.

Die Länge der notwendigen Ringspalte kann auf einfache Art und Weise dadurch erreicht werden, dass die Stirndeckel aus einem so starken Material hergestellt sind, dass zumindest im Bereich der Durchgänge durch diesen Stirndeckel und der Ringspalte die notwendige Ringspaltlänge ohne weitere Maßnahmen erreicht wird.

Das nicht druckfeste Gehäuseteil ist topfförmig auf die Außenseite des druckfesten Gehäuseteils, vorzugsweise auf dessen Stirnseite, direkt oder indirekt aufgesetzt.

Bevorzugt ist eine indirekte Anbringung, indem auf den äußeren Stirnflächen der Stirndeckel zunächst Standplatten aufgesetzt sind, die radial über die Stirndeckel, deren Außendurchmesser etwa dem Außendurchmesser des Gehäusemantels entspricht, hinausragen und einem Aufsetzen des druckfesten Gehäuseteils mit der Längsachse parallel zu einer Grundplatte dient.

Diese Standplatten werden über Durchgangslöcher in Sacklöchern der Stirndeckel des druckfesten Gehäuseteils verschraubt.

Zu diesem Zweck sind in einer der Standplatten die Durchgangslöcher als bogenförmige Langlöcher zentrisch zum Mittelpunkt angeordnet, um trotz vor der Montage nicht feststehender Drehlage des Stirndeckels zum Mantel des druckfesten Gehäuses die zweite Standplatte in ihrer Drehlage fluchtend zur ersten Standplatte ausrichten zu können.

Indem die verbindende Welle am Inneren, also im druckfesten Gehäuseteil endenden Ende, als Hohlwelle ausgebildet ist und dort der Wellenzapfen des Winkel-Aufnehmers direkt drehfest eingesteckt werden kann, ergibt sich eine besonders einfache Montagemöglichkeit.

Gleiches gilt für die Anbringung der Platine, welche die Auswerteelektronik trägt, im stirnseitigen Abstand zwischen Winkel-Aufnehmer und dem von der Welle abgewandten Stirndeckel, insbesondere in einer Ebene quer zur Längsachse des rotationssymmetrischen, druckfesten Gehäuseteiles, wo es beispielsweise mittels eines Abstandhalters, der am Federgehäuse verschraubt wird, nach der Montage von Feder, Federgehäuse und Winkel-Aufnehmer montiert und mit dem Winkel-Aufnehmer elektrisch verbunden werden kann.

Um eine Funkenbildung an den bewegten Komponenten im nicht druckfesten, lediglich staubgeschützten, Gehäuseteil zu erreichen, besteht neben diesem Gehäuseteil auch das Messseil aus Edelstahl und ist mit Kunststoff, z.B. Nylon, ummantelt. Auch die Auslauföffnung für das Messseil aus dem nicht druckfesten Gehäuseteil besteht nicht aus Metall, sondern vorzugsweise aus Kunststoff.

Durch diese Ausbildung der einzelnen Komponenten lässt sich ein einfaches und schnelles Montageverfahren verwirklichen, welches bezüglich des druckfesten Gehäuseteiles und der darin aufgenommenen Komponenten so abläuft dass
- die Welle von innen nach außen durch zuerst das Wälzlager und anschließend den Stirndeckel des Gehäusemantels hindurch geschoben wird bis zum Anschlag einer Schulter der Welle,
- das Federgehäuse mit darin eingesetzter Flachspiralfeder von dem hinteren freien Ende der Welle her auf diese aufgeschoben wird unter drehfester Verbindung der Flachspiralfeder mit der Welle,
- eine drehfeste Verbindung, insbesondere Verschraubung des Federgehäuses mit dem Stirndeckel hergestellt wird,
- der Winkel-Aufnehmer auf das hintere Ende der Welle aufgesetzt wird und mittels einer Drehmomentstütze gegenüber dem Federgehäuse abgestützt wird und
- der Winkel-Aufnehmer elektrisch angeschlossen wird, falls innerhalb des Gehäuses auch eine Auswerteelektronik für die Signale des Winkelaufnehmers vorhanden ist, und diese Signale nicht zu einer außerhalb des Sensor-Gehäuses befindlichen Auswerteelektronik geführt werden.
- Anstelle eines durch eine Kabeltülle durch das Gehäuse, z.B. den Stirndeckel, nach außen geführten Kabels kann ein Stecker bzw. eine Steckbuchse in der Außenseite des Gehäuses, z.B. des Stirndeckels verwendet werden. Wird diese anstelle der Kabeltülle in den Stirndeckel eingesetzt, ist sie mit dem Winkelaufnehmer elektrisch verbunden.

Dabei kann zur Erleichterung aller bisher beschriebenen Montageschritte als allererster Schritt der erste Stirndeckel zunächst an der ersten Standplatte verschraubt und diese an der Grundplatte befestigt werden, um danach alle vom ersten Stirndeckel getragenen Bauteile leichter montieren zu können. Darauf erfolgt:
- Befestigen der Auswerteelektronik mittels des Abstandshalters am Federgehäuse,
- Herausführen des mit der Auswerteelektronik verbundenen Kabels durch den Stirndeckel und die Kabeltülle,
- Einschrauben und Festziehen des Stirndeckels in stirnseitiger Öffnung des Gehäusemantels, und
- Einsetzen der Kabeltülle in den Stirndeckel.

Der weitere Aufbau des Sensors über den druckfesten Gehäuseteil hinaus erfolgt dann so, dass
- stirnseitig darauf die wenigstens zweite Standplatte verschraubt und dabei die Standplatten zueinander in Axialrichtung in fluchtende Lage gebracht werden und
- gegebenenfalls auf einer Grundplatte verschraubt werden.

Jetzt oder bereits nach Einschieben der Welle durch den ersten Stirndeckel und Aufschrauben der ersten Standplatte kann
- an der einen Standplatte das nicht druckfeste Gehäuseteil mit der darin angeordneten und gewickelten Seiltrommel aufgesetzt und
- durch Relativverdrehung der Gehäuseteile die Flachspiralfeder aufgezogen und
- zuletzt das Gehäuseteil am druckfesten Gehäuseteil in dieser vorgespannten Drehlage verschraubt werden.

### c) Ausführungsbeispiele

Ausführungsformen gemäß der Erfindung sind im Folgenden beispielhaft näher beschrieben. Es zeigen:
- Fig. 1:: eine perspektivische Ansicht des fertig aufgebauten Positionssensors,
- Fig. 2:: Ansichten des Positionssensors von außen,
- Fig. 3:: einen Längsschnitt durch den Sensor, und
- Fig. 4:: einen teilweise zusammengebauten Positionssensor.

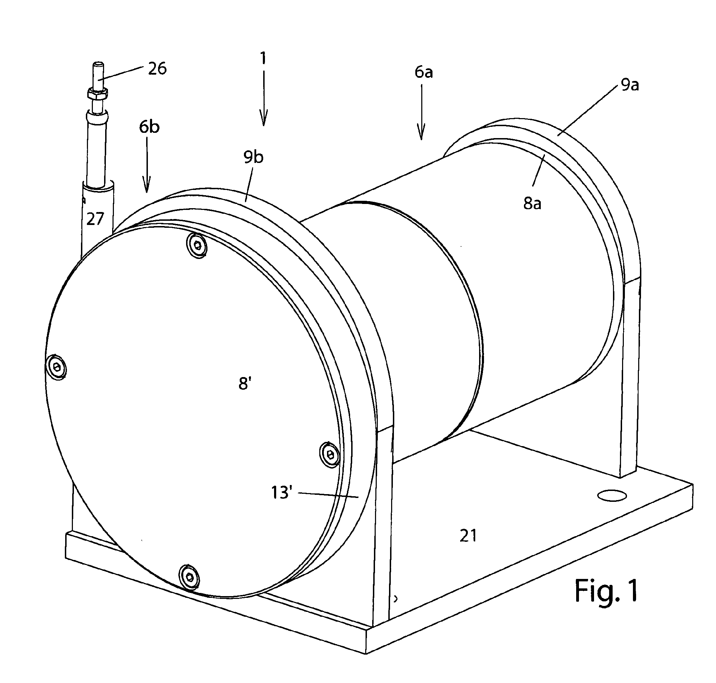

Fig. 1 zeigt, dass der Sensor 1 einen zylindrischen Gehäuseteil 6a umfasst, der mit seiner Längsachse parallel dem Abstand zu einer Grundplatte 21 gehalten ist mittels stirnseitiger Standplatten 9a,b, wobei auf der Außenseite einer dieser Standplatten ein zweiter Gehäuseteil 6b befestigt ist, aus dem das Messseil 3 herausführt, dessen Befestigungsadapter 26 im aufgewickelten Zustand des Seiles auf dem Seileinlauf-Turm 27 aufsitzt.

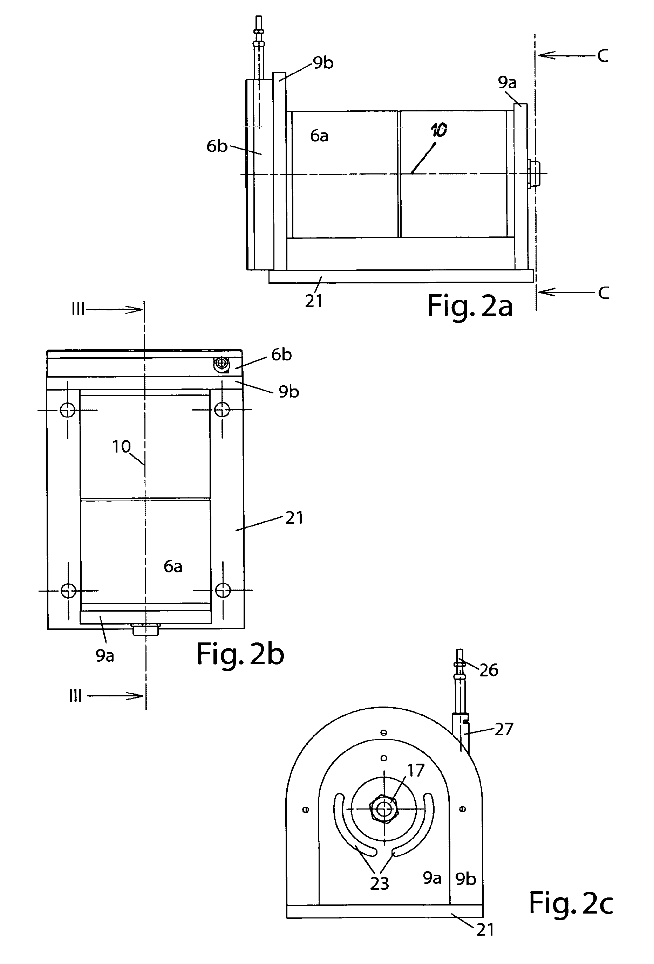

Von den Fig. 2 zeigt Fig. 2a die Seitenansicht quer zur Längsachse 10, Fig. 2b die Aufsicht von oben und Fig. 2c die Stirnansicht von der vom Gehäuseteil 6b abgewandten Seite her.

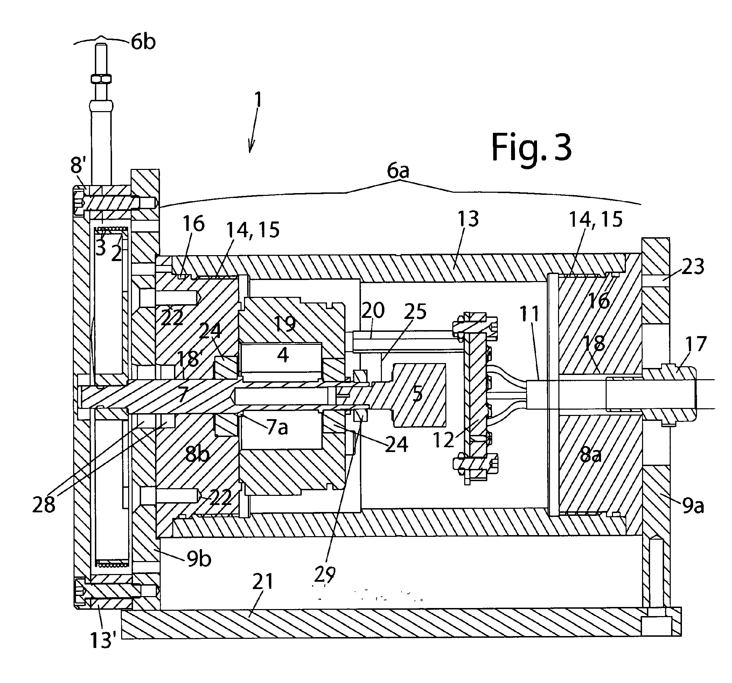

Die folgenden Details lassen sich am besten an Hand der Längsschnittdarstellung der Fig. 3 erkennen:

Der Aussendruck- und Innendruck-feste und insbesondere explosionssichere Teil ist das Gehäuseteil 6a, das rotationssymmetrisch ausgebildet ist aus einem zylindrischen, rohrförmigen Gehäusemantel 13 mit mehreren Schultern und Absätzen im Innendurchmesser, welcher stirnseitig verschlossen wird durch Stirndeckel 8a, b, die mit einer Schulter auf den Stirnflächen des Gehäusemantels 13 aufsitzen und mit dem Großteil ihrer Länge in den Innendurchmesser des Gehäusemantels 13 eintauchen und gegen ein dort vorhandenes Innengewinde verschraubt werden.

Zwischen dem aufsitzenden Flansch und der Verschraubung 15 der Stirndeckel 8a,b ist jeweils ein umlaufender O-Ring 16 in einer entsprechender Nut untergebracht. Die Stirndeckel 8a,b werden also gegen den Gehäusemantel 13 so fest verschraubt, dass die gewünschte Dichtigkeit erreicht wird.

Auf den Außenflächen der Stirndeckel 8a,b sind Standplatten 9a,b aufgesetzt und axial von außen her in Sacklochbohrungen 22 der Stirndeckel verschraubt, wobei die Stirnplatten 9a,b radial in eine Richtung über den Gehäusemantel 13 gleich weit vorstehen und dadurch dem Verschrauben auf einer Grundplatte 21 dienen können.

Zusätzlich ist die eine Stirnplatte 9b auch in radialer Richtung so groß ausgebildet, dass sie über den restlichen Umfangsbereich des Mantels 13 und damit der Stirnplatte 8b hinausragt, so dass auf der vom Gehäuseteil 6a abgewandten Seite her ein Gehäuse 6b auf diese Grundplatte 9b aufgesetzt werden kann, wiederum bestehend aus einem rohrförmigen Gehäusemantel 13' und einem Stirndeckel 8', wodurch jedoch kein druckfestes, sondern nur ein staubdichtes Gehäuseteil 6b gebildet wird.

In dem Gehäuseteil 6b ist die Seiltrommel 2 gelagert, auf welchem das Messseil 3 vorzugsweise einlagig aufgewickelt wird, welches durch den Seilauslauf in Form eines Seilauslauf-Turmes 27 diesen Gehäuseteil 6b verlässt, auf dessen äußerer Stirnfläche der Befestigungsadapter 26 am freien Ende des Seiles im vollständig aufgewickelten Zustand des Seiles aufsitzt.

Da die Seiltrommel 2 drehfest mit einigen der weiteren Funktionselemente verbunden sein muss, die allesamt die Gefahr einer Funkenbildung in sich tragen und deshalb im druckfesten und insbesondere explosionsgeschützten Gehäuseteil 6a untergebracht sind, erfolgt der Montageablauf wie folgt:
zunächst kann der dem späteren Gehäuseteil 6b zugewandte Stirndeckel 8b mit der Standplatte 9b verschraubt werden, die bereits mit der Standplatte 9b verschraubt ist, wobei vorher dort jeweils die Lippendichtungen 28 eingesetzt werden.

Vom Inneren des Gehäuses 6a aus wird nun - vorzugsweise nach der beschriebenen Verschraubung - die verbindende Welle 7 durch die passende zentrale Durchgangsbohrung 18' im Stirndeckel 8b und die dort vorhandenen Wälzlager 24 auf der Innenseite dieses Stirndeckels 8b sowie die Lippendichtungen 28 auf der Außenseite des Stirndeckels 8b und der Innenseite der Standplatte 9b geschoben, so dass deren freier Endzapfen aus der Stirnplatte 9b bis in den Axialbereich der späteren Seiltrommel 2 vorsteht.

Anschließend wird im Inneren des Gehäuseteiles 6a die Flachspiralfeder 4 und das sie aufnehmende, topfförmige Federgehäuse 19 auf den aus der Stirnplatte 8b nach innen hervorstehenden Teil der Welle 7 aufgeschoben, vorzugsweise gemeinsam, wobei die Flachspiralfeder 4 mit ihrem einen, vorzugsweise äußeren Ende drehfest mit dem Federgehäuse 19 und ihrem anderen, vorzugsweise inneren Ende drehfest mit der Welle 7 verbunden wird, beispielsweise durch axiales Einschieben.

Anschließend wird das Federgehäuse 19 drehfest mit dem Stirndeckel 8b verbunden, insbesondere verschraubt.

Dabei ist auch im Boden des Federgehäuses 19 ein Wälzlager 24 für den aus dem Federgehäuse 19 vorstehenden inneren Endteil der Welle 7 vorhanden, der als Hohlwelle und stirnseitig offen ausgebildet ist, so dass der Wellenstumpf eines Winkel-Aufnehmers 5 darin eingesetzt und mit diesem drehfest verbunden werden kann durch Aufschrauben einer Klemmmutter 29.

Im axialen Freiraum zwischen dem Winkel-Aufnehmer 5 und dem noch freien Ende des Gehäusemantels 13 wird eine oder mehrere Platinen mit der Auswerteelektronik 12 befestigt mittels z.B. eines Abstandhalters 20 gegenüber dem Federgehäuse 19.

Zusätzlich ist die Welle 7 über eine Drehmomentstütze 25 drehfest gegenüber dem Abstandhalter 20 abgestützt.

Die Auswerteelektronik 12 ist einerseits mit den elektrischen Ausgängen Winkel-Aufnehmers 5 verbunden und andererseits mit den Enden eines Kabels 11, welches die Ausgangssignale der Auswerteelektronik 12 nach außen überträgt.

Zu diesem Zweck führt das Kabel 11 durch eine explosionssichere Kabeltülle 17, die von außen in die zentrale Durchgangsbohrung 18 eines weiteren Stirndeckels 8a druckfest und explosionssicher eingeschraubt ist, nach außen.

Der Stirndeckel 8a ist wie der andere Stirndeckel 8b mit Flansch und Außengewinde sowie O-Ring 16 ausgestattet und in ein entsprechendes Innengewinde des Mantels 13 hinein verschraubt, der zuvor auf den ersten Stirndeckel 8a aufgeschraubt wurde.

Das Heranführen und Einschrauben der Kabeltülle 17, durch die hindurch bereits das Kabel 11 gefädelt ist, erfolgt vorzugsweise nach dem Einschrauben und Festziehen der Stirnplatte 8a im Gehäusemantel 13.

Auf das so komplett montierte und geschlossene Gehäuse 6a wird anschließend die zweite Stirnplatten 9b aufgesetzt und verschraubt.

Da hierbei die Drehlage der Sacklöcher 22 in den Stirndeckeln 8a,b zum Aufschrauben der Standplatten 9a,b von der Endstellung der Stirndeckel 8a,b beim Einschrauben in den Gehäusemantel 13 abhängt, andererseits aber die Drehlagen der Standplatten 9a,b zueinander fluchten müssen, um damit das Gehäuse 6a auf der Standplatte 21 verschrauben zu können, sind in der einen, dem Gehäuseteil 6b zugewandten, Standplatte 9b normale Durchgangsbohrungen zum Verschrauben gegenüber dem Stirndeckel vorgesehen, dagegen in der hiervon abgewandten Standplatte 9a bogenförmig um das Zentrum herum verlaufende Langlöcher 23, wie am besten in Fig. 2c zu erkennen.

Durch Aufsetzen und Fixieren der Seiltrommel 2 sowie Einführen des Messseiles 3 durch den Seilauslaufturm 27 von Außen nach Innen und Befestigen an der Seiltrommel 2 sind die Funktionselemente komplett und der Gehäuseteil 6b kann durch Aufsetzen seines Stirndeckel 8' und Verschrauben durch den rohrförmigen Gehäusemantel 13' hindurch in die Standplatte 9b hinein verschlossen werden.

Dies kann auch bereits unmittelbar nach Hindurchstechen der Welle 7 und Aufschrauben der Standplatte 9b erfolgen.

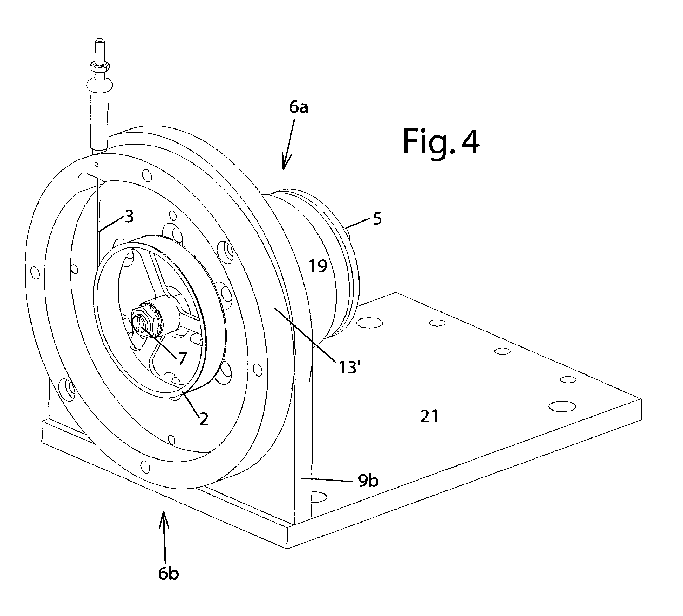

Weiterhin zeigt Fig. 4 einen teilweise zusammengebauten Positionssensor, wie er sich ergibt, wenn der beschriebene, besonders vorteilhafte Montageablauf gewählt wird:
Dabei wird zunächst diejenige Standplatte 9b, die zwischen den beiden Gehäuseteilen 9a und 9b sitzt und diese trägt, auf der Grundplatte 21 montiert.

Anschließend werden von dort aus die in den beiden Gehäuseteilen 9a und 9b aufgenommenen Bauteile nacheinander montiert, wobei zunächst begonnen werden muss mit dem Verschrauben des angrenzenden Stirndeckels 8b an der Standplatte 9b, wobei eventuelle Dichtungen wie die Lippendichtungen 28 in diesen beiden Teilen bereits vorher eingesetzt werden müssen.

Anschließend kann die Welle 7 durch die Durchgangsbohrung dieser beiden Platten hindurch geschoben werden.

Daraufhin können von beiden Seiten die mit dieser Welle drehfest verbundenen Teile aufgesetzt und verbaut werden, also im späteren Gehäuseteil 6b die Seiltrommel 2 und auf der anderen Seite die Flachspiralfeder sowie das sie aufnehmende Federgehäuse 19, auf welchem dann später weitere Bauteile angeordnet werden, beispielsweise der Winkel-Aufnehmer 5, der in Fig. 4 nur noch ansatzweise zu sehen ist.

Auf der Seite des Gehäuseteiles 6b wird dann der dem Mantel 13' darstellende Ring auf die Standplatte 9b aufgesetzt und mit dieser verschraubt, woraufhin das Messseil 3 durch die Auslauföffnung und den in der Regel zu diesem Zweck am Mantel 13 außen aufgesetzten Seileinlauf-Turm hindurchgefädelt und mit dem inneren freien Ende an der Seiltrommel 2 befestigt, woraufhin durch drehen des Federgehäuses 19 relativ zur Standplatte 9b das Seil 3 auf der Seiltrommel 2 aufgewickelt und die im Federgehäuse enthaltende Flachspiralfeder aufgezogen, also vorgespannt, werden kann und dann in dieser Vorspannlage das Federgehäuse 19 gegenüber dem es tragenden Stirndeckel drehfest verschraubt wird.

Dies ergibt den in Fig. 4 dargestellten Montagezustand, dessen weitere notwendige Montageschritte bereits erläutert wurden.

### BEZUGSZEICHENLISTE

- 1: Positionssensor
- 2: Seiltrommel
- 3: Messseil
- 4: Flachspiralfeder
- 5: Winkel-Aufnehmer
- 6: Gehäuse
- 6a, b: Gehäuseteil
- 7: Welle
- 7a: Schulter
- 8a, b,: 8' Stirndeckel
- 9a, b: Standplatte
- 10: axiale Richtung
- 11: Kabel
- 12: Auswerteelektronik
- 13, 13': Gehäusemantel
- 14: Ringspalt
- 15: Verschraubung
- 16: O-Ring
- 17: Kabeltülle
- 18, 18': Durchgangsöffnung
- 19: Federgehäuse
- 20: Abstandshalter
- 21: Grundplatte
- 22: Gewindesackloch
- 23: Langloch
- 24: Wälzlager
- 25: Drehmomentstütze
- 26: Befestigungsadapter
- 27: Turm
- 28: Lippendichtung
- 29: Klemmmutter

## Patentansprüche

1. Wegmessseil-Positionssensor (1) mit
- einer Seiltrommel (2) zum Aufwickeln des Messseiles (3),
- einer Flachspiralfeder (4) zum Vorspannen der Seiltrommel (2), die drehfest miteinander verbunden sind,
- einem Winkel-Aufnehmer (5), insbesondere einem Encoder, der mit der Seiltrommel drehgekoppelt ist, und
- einem Gehäuse (6), wobei
- die Flachspiralfeder (4) und der Winkel-Aufnehmer (5), insbesondere der Encoder, in einem ersten, Außendruck-dichten Gehäuseteil (6a) angeordnet sind,
- die Seiltrommel (2) in einem nicht-druckdichten zweiten Gehäuseteil (6b) angeordnet ist,
- eine Welle (7), die die Seiltrommel (2) mit der Flachspiralfeder (4) bzw. den Winkel-Aufnehmer (5) drehfest verbindet, durch den druckfesten ersten Gehäuseteil (6a) hindurchführt,
- der Gehäusemantel (13) des ersten Gehäuseteiles (6a) einstückig rohrförmig ist und beidseitig von Stirndeckeln (8a, b) verschlossen ist, und
- je ein Ringspalt (14) in Form einer Verschraubung (15) zwischen Stirndeckel (8a,8b) und rohrförmigem Gehäusemantel (13) vorhanden ist und an einem Ende der axialen Erstreckung der Verschraubung (15) mindestens ein O-Ring (16) als Dichtung angeordnet ist,
**dadurch gekennzeichnet, dass**
- das erste Gehäuseteil (6a) so stark dimensioniert ist, dass es einen Explosions-Innendruck aushält, ohne dass im Gehäuse (6a) vorhandene Spalte nicht mehr zünddurchschlagsicher sind, indem die Stirndeckel
- (8a,8b) den Gehäusemantel (13) in dessen Endbereichen axial soweit überlappen, dass die axiale Länge der dazwischen befindlichen Ringspalte (14) relativ zu ihrer radialen Breite so gross sind, dass sie zünddurchschlagsicher sind.

2. Wegmessseil-Positionssensor (1) nach einem der vorhergehenden Ansprüche,
**dadurch gekennzeichnet, dass**
auf einer Mantelfläche des zweiten Gehäuseteiles (6b) ein Seileinlauf-Turm (27) angeordnet ist, dessen Länge in Verlaufsrichtung des Seiles groß genug ist, um einerseits die notwendige seitliche Auslenkung für das Bewickeln der gesamten Seiltrommelbreite so gering zu halten, dass dennoch zuverlässig die einlagige Bewicklung sichergestellt wird und andererseits zusätzlich wenigstens eine Bürste (28) zum Reinigen des Messseiles (3) im Turm (27) angeordnet werden kann.

3. Wegmessseil-Positionssensor (1) nach Anspruch 2,
**dadurch gekennzeichnet, dass**
die Länge des Seileinlauf-Turmes (27) so lang ist, dass die Länge im Vergleich zur radialen Breite des Ringspaltes zwischen Messseil (3) und Durchgangsöffnung im Turm (27) so groß ist, dass dieser Spalt zünddurchschlagsicher ist und damit das Gehäuseteil (6b) ebenfalls explosionssicher, ist.

4. Wegmessseil-Positionssensor (1) nach einem der vorhergehenden Ansprüche,
**dadurch gekennzeichnet, dass**
- in dem ersten Stirndeckel (8a) eine Durchgangsöffnung (18) vorhanden ist, in die eine Kabeltülle (17) oder ein Stecker (29), jeweils zuzüglich einer Dichtung, zum Herausführen des Kabels druckdicht und, (11) zünddurchschlagsicher eingesetzt ist, und
- im zweiten Stirndeckel (8b) eine Durchgangsöffnung (18') angeordnet ist, in der die Welle (7) unmittelbar anschließend an einem zünddurchschlagsicheren Ringspalt gelagert ist.

5. Wegmessseil-Positionssensor (1) nach einem der vorhergehenden Ansprüche,
**dadurch gekennzeichnet, dass**
an den stirnseitigen Außenflächen des druckfesten ersten Gehäuseteils (6a) Standplatten (9a, b) verschraubt sind, die in eine Richtung radial über den ersten Gehäuseteil (6a) hinausragen zum Aufstellen des ersten Gehäuseteils (6a) in paralleler Lage zu einer Grundplatte (21).

6. Wegmessseil-Positionssensor (1) nach Anspruch 5,
**dadurch gekennzeichnet, dass**
- die eine Standplatte (9b) kreisförmige Durchgangsöffnungen zum Verschrauben in Gewinde-Sacklöchern (22) des zweiten Stirndeckels (8b) aufweist, und
- die andere Standplatte (9a) bogenförmig um das Zentrum herum gekrümmte Langlöcher (23) für das Verschrauben in Sacklöchern des ersten Stirndeckels (8a) aufweist.

7. Wegmessseil-Positionssensor (1) nach Anspruch 6,
**dadurch gekennzeichnet, dass**
auf die Innenseite des zweiten Stirndeckels (8b) ein topfförmiges Federgehäuse (19) mit der offenen Seite aufgesetzt ist, in dem sich die Flachspiralfeder (4) mit dem einen Ende abstützt und welches von der Welle (7) durchdrungen wird, die in diesem gelagert ist.

8. Wegmessseil-Positionssensor (1) nach einem der vorhergehenden Ansprüche,
**dadurch gekennzeichnet, dass**
das Messseil (3) aus hochfestem Metall, besteht und eine KunststoffUmmantelung, insbesondere eine Polyamid-Ummantelung, aufweist.

9. Wegmessseil-Positionssensor (1) nach Anspruch 6,
**dadurch gekennzeichnet, dass**
- der erste Stirndeckel (8a) eine axiale Dicke aufweist, die größer ist als die notwendige axiale Länge des zünddurchschlagsicheren Ringspaltes (14) und die Länge der Gewinde-Sacklöcher (22), und
- der zweite Stirndeckel (8b) axial dicker ist als die benötigte axiale Länge der Verschraubung (15) gegenüber dem rohrförmigen Gehäusemantel (13) zuzüglich der axialen Erstreckung des O-Ringes (16) und auch dicker als die Tiefe der Sacklöcher (22) und auch dicker als die zünddurchschlagsichere Länge des Ringspaltes gegenüber der Welle (7) zuzüglich der Länge deren Wälzlager (24).

10. Wegmessseil-Positionssensor (1) nach einem der vorhergehenden Ansprüche,
**dadurch gekennzeichnet, dass**
der Positionssensor (1) eine Vorrichtung zur kontaktlosen Übertragung von Signalen aus dem Positionssensor (1) hinaus und/oder von elektrischer Energie in den Positionssensor (1) hinein durch die geschlossene Gehäusewand hindurch aufweist.

11. Verfahren zur Montage des Wegmessseil-Positionssensors (1) gemäß einem der Ansprüche 1 bis 10,
**dadurch gekennzeichnet, dass**
- zum Aufbau des druckfesten ersten Gehäuseteiles (6a) die Welle (7) von innen nach außen durch zuerst ein Wälzlager (24) und anschließend den zweiten Stirndeckel (8b) hindurch geschoben wird bis zum Anschlag einer Schulter (7a) der Welle (7),
- ein Federgehäuse (19) mit der darin eingesetzten Flachspiralfeder (4) von dem hinteren freien Ende der Welle (7) her auf diese aufgeschoben wird unter drehfester Verbindung der Flachspiralfeder (4) mit der Welle (7),
- eine drehfeste Verbindung, insbesondere Verschraubung, des Federgehäuses (19) mit dem ersten Stirndeckel (8a) erstellt wird,
- der Winkel-Aufnehmer (5) drehfest auf das hintere Ende der Welle (7) aufgesetzt wird und mittels einer Drehmomentstütze (25) gegenüber dem Federgehäuse (19) abgestützt wird und
- der Winkel-Aufnehmer (5) elektrisch angeschlossen wird.

12. Verfahren nach Anspruch 11,
**dadurch gekennzeichnet, dass**
- der druckfeste, explosionsgeschützte erste Gehäuseteil (6a) mit den darin aufzunehmenden Komponenten montiert und druckfest verschlossen wird,
- stirnseitig darauf die Standplatten (9a, b) verschraubt und zueinander in Axialrichtung in fluchtende Lage gebracht werden und gegebenenfalls auf einer Grundplatte (21) verschraubt werden,
- an der einen Standplatte (9b) der nicht druckfeste zweite Gehäuseteil (6b) mit der darin angeordneten und gewickelten Seiltrommel (2) aufgesetzt wird,
- durch Relativverdrehung der Gehäuseteile (6a,6b) die Flachspiralfeder (4) aufgezogen wird und
- der zweite Gehäuseteil (6b) am druckfesten ersten Gehäuseteil (6a) in dieser vorgespannten Drehlage verschraubt wird.

13. Verfahren zum Betreiben eines Wegmessseil-Positionssensors nach einem der Ansprüche 1 bis 10,
**dadurch gekennzeichnet, dass**
- die vom Winkelaufnehmer (5) ermittelten Signale kontaktlos durch die geschlossene Gehäusewand nach außen getragen werden, insbesondere mittels elektromagnetischer Wellen, und/oder
- die für den Betrieb des Winkelaufnehmers (5), insbesondere dessen Auswerteelektronik (12), benötigte elektrische Energie kontaktlos, insbesondere mittels elektromagnetischer Wellen, von außen durch die geschlossene Gehäusewand hindurch zugeführt wird.

## Claims

1. A distance-measuring cable position sensor (1), including:
- a cable drum (2) for winding up the measuring cable (3);
- a flat spiral spring (4) for preloading the cable drum (2), connected rotation proof with each other;
- an angle sensor (5), an encoder in particular, rotation-coupled with the cable drum; and
- a housing; wherein
- the flat spiral spring (4) and the angle sensor (5), in particular the encoder, are located in a first housing section (6a), tight against external pressure;
- the cable drum (2) is located in a non pressure tight second housing section (6b);
- a shaft (7), rotation proof connecting the cable drum (2) with the flat spiral spring (4) or the angle sensor (5), and which leads through the first pressure tight housing section (6a);
- the housing body (13) of the first housing section (6a) is tubular and made from one piece and closed by head covers (8a, 8b) on both sides; and
- respectively one annular gap (14) in the form of a threaded connection (15) between head covers (8a, 8b) and the tubular housing body (13) is provided and on one end of the axial extension of the threaded connection (15) at least one O-ring (16) is located as a seal;
**characterized in that**
said first housing section (6a) is sized strong enough, so it stands an internal explosion pressure, without gaps existing in the housing (6a) becoming unsafe against ignition passage while said head covers (8a, 8b) are axially overlapping the housing body (13) in its end areas, so that the axial length of the annular gap (14) in between is large enough relative to its radial width, that it is proof against ignition passage.

2. A distance-measuring cable position sensor (1) according to one of the preceding claims, **characterized in that**
a cable inlet turret (27) is located on the outer surface of the second housing section (6b), whose length in direction of the cable is large enough to keep the necessary lateral deflection for winding on the whole width of the drum small enough to reliably assure a single layer wind up and on the other hand additionally at least one brush (28) for cleaning the measuring cable (3) can be located in the turret (27).

3. A distance-measuring cable position sensor (1) according to claim 2,
**characterized in that**
the length of the cable inlet turret (27) is long enough, so that the length in comparison to the radial width of the annular gap between the measuring cable (3) and the pass through opening in the turret (27) is large enough, so that the gap is proof against ignition passage, so that the housing section (6b) is also explosion proof.

4. A distance-measuring cable position sensor (1) according to one of the preceding claims,
**characterized in that**
- in the first head cover (8a) a pass through hole (18) is provided, in which a cable grommet (17) or a connector (29), each with an added seal, for running the cable (11) out, is inserted in a pressure tight manner that is safe against ignition passage; and
- in the second head cover (8b) a pass through opening (18') is located, in which the shaft (7) is held in a bearing immediately after the annular gap, safe against ignition passage.

5. A distance-measuring cable position sensor (1) according to one of the preceding claims,
**characterized in that**
onto the frontal outer surfaces of the pressure tight first housing section (6a) standoff plates (9a, 9b) are bolted, which radially protrude beyond the first housing section (6a) for mounting the first housing section (6a) in parallel to a base plate (21).

6. A distance-measuring cable position sensor (1) according to claim 5,
**characterized in that**
- the standoff plate (9b) has circular pass through holes for bolting into threaded blind holes (22) of the second head cover (8b); and
- the other standoff plate (9a) has slotted holes (23), arched around the center for bolting into the blind holes of the first head cover (8a).

7. A distance-measuring cable position sensor (1) according to claim 6,
**characterized in that**
onto the inside of the second head cover (8b) a pot shaped spring housing (19) is placed with its open side, while the flat spiral spring (4) is supported on one end and which is also penetrated by the shaft (7), which is held in a bearing therein.

8. A distance-measuring cable position sensor (1) according to one of the preceding claims,
**characterized in that**
the measuring cable (3) is made from high strength metal, and has a plastic cover, in particular a polyamide cover.

9. A distance-measuring cable position sensor (1) according to claim 6,
**characterized in that**
- the first head cover (8a) has an axial thickness in excess of the necessary axial length of the annular gap (14), which is safe against ignition passage, and also in case of the length of the threaded blind holes (22); and
- the second head cover (8b) is axially thicker than the necessary axial length of the threaded connection (15) relative to the tubular housing body (13) plus the axial extension of the O-ring (16) and also thicker than the depth of the blind holes (22) and also thicker than the length of the annular gap safe against ignition passage, relative to the shaft (7) plus the length of its roller bearing (24).

10. A distance-measuring cable position sensor (1) according to one of the preceding claims,
**characterized in that**
the position sensor (1) comprises a device for the non contact transfer of signals from the position sensor (1) and/or of electrical energy into the position sensor (1) through the closed housing wall.

11. A process for assembling the distance-measuring cable position sensor (1) according to one of the preceding claims 1 through 10,
**characterized in that**
- for assembling the pressure tight first housing section (6a) the shaft (7) is pushed from the inside out, first through the roller bearing (24) and thereafter through the second head cover (8b) until a shoulder (7a) of the shaft (7) contacts;
- a spring housing (19) with the inserted flat spiral spring (4) is pushed onto the shaft (7) from its rear free end, connecting the flat spiral spring (4) with the shaft (7) in a rotation proof manner;
- rotation proof connection, in particular bolted connection of the spring housing (19) with the first head cover (8a);
- rotation proof placement of the angle sensor (5) onto the rear end of the shaft (7) and support with a torque link (25) relative to the spring housing (19); and
- electrical connection of the angle sensor (5).

12. A process according to claim 11,
**characterized in that**
- the pressure tight, explosion protected first housing section (6a) with the components to be contained is assembled and closed pressure tight;
- the standoff plates (9a, 9b) are bolted onto the face thereupon and aligned flush with each other in axial direction and bolted onto a base plate (21), if necessary;
- onto the one standoff plate (9b) the non pressure proof second housing section (6b) with the enclosed, wound up cable drum (2) is inserted;
- the flat spiral spring (4) is wound up through relative rotation of the housing sections (6a, 6b); and
- the second housing section (6b) is bolted to the pressure tight first housing section (6a) in this preloaded rotation position.

13. A process for operating a distance-measuring cable position sensor (1) according to one of the preceding claims,
**characterized in that**
- the signals derived by the angle sensor (5) are transferred through the closed housing wall to the outside in a non contact manner, in particular through electromagnetic waves; and/or
- the electrical energy required for the operation of the angle sensor (5), in particular for its processing electronics (12) is provided without contact, in particular through electromagnetic waves from the outside through the closed housing wall.

## Revendications

1. Capteur de position utilisant une corde d'arpentage (1) avec un tambour à câble (2) pour l'enroulement de la corde d'arpentage (3),
- un ressort spiralé plat (4) pour la précontrainte du tambour (2) qui sont reliés ensemble de manière rigide à la torsion,
- un détecteur angulaire (5) en particulier un encodeur qui est couplé en rotation avec le tambour à câble et
- un carter (6),
- le ressort spiral plat (4) et le détecteur angulaire (5), en particulier l'encodeur, étant disposés dans une première partie de carter (6a) étanche à la pression externe,
- le tambour à câble (2) étant logé dans une second partie de carter (6b) non étanche à la pression,
- un arbre (7), qui relie le tambour à câble (2) rigide en rotation au ressort spiral plat (4) respectivement du détecteur angulaire (5), étant guidé à travers à travers la première partie de carter (6a) résistant à la pression,
- l'enveloppe de carter (13) de la premier partie de carter (6a) étant de forme tubulaire d'une seule pièce et étant fermée de part et d'autre par des couvercles frontaux (8a, b) et
- une fente annulaire (14) existant sous forme d'un vissage (15) entre le couvercle avant (8a, 8b) et l'enveloppe tubulaire de carter (13) et sur une extrémité de l'extension axiale du vissage (15) est disposé au moins un joint torique (16) en tant que garniture d'étanchéité,
**caractérisé en ce que**
- la première partie de carter (6a) présente une épaisseur de sorte qu'elle résiste à une pression interne d'explosion sans que les fentes se trouvant dans le carter (6a) ne soient plus antidéflagrantes dans le fait que les couvercles frontaux (8a, 8b) chevauchent l'enveloppe de carter (13) dans sa zone d'extrémité axialement suffisamment loin pour que la longueur axiale de la fente annulaire (14) intercalée est suffisamment grande par rapport à sa largeur radiale de manière à être antidéflagrante.

2. Capteur de position avec corde d'arpentage (1) selon l'une des revendications précédentes, **caractérisé en ce que** sur une surface d'enveloppe de la seconde partie de carter (6b), est disposée une tourelle d'enfilage de câble (27) dont la longueur est suffisante dans le sens de défilement de la corde pour maintenir d'une part aussi faible que possible la déviation latérale nécessaire pour l'enroulement de l'ensemble de la largeur de tambour de câble de sorte que l'enroulement monocouche soit assuré , et d'autre part qu'on puisse disposer en supplément dans la tourelle (27) une brosse (28) pour le nettoyage de la corde d'arpentage (3).

3. Capteur de position avec corde d'arpentage (1) selon la revendication 2, **caractérisé en ce que** la longueur de la tourelle d'enfilage de câble (27) est suffisamment longue pour que la longueur en comparaison de la largeur radial de la fente annulaire entre la corde d'arpentage (3) et l'ouverture de passage soit suffisamment grande dans la tourelle (27) de sorte que cette fente est antidéflagrante et ainsi la partie de carter (6b) est également à l'épreuve de l'explosion.

4. Capteur de position avec corde d'arpentage selon l'une des revendications précédentes, **caractérisé en ce que**
- dans le premier couvercle frontal (8a), il existe une ouverture de passage (18) dans laquelle est introduite une entrée de câble (17) ou une douille (29) respectivement en plus d'une garniture d'étanchéité pour l'extraction du câble (11) de manière étanche à la pression et de manière antidéflagrante et
- dans le second couvercle frontal (8b) est disposée une ouverture de passage (18') dans laquelle est logé l'arbre (7) directement dans le prolongement d'une fente annulaire antidéflagrante.

5. Capteur de position (1)avec corde d'arpentage selon l'une des revendications précédentes, **caractérisé en ce que** sur les surfaces externes frontales de la première partie de carter (6a) résistant à la pression, sont vissées des plateformes (9a, b) qui s'engagent dans une direction radialement au dessus de la première partie de carter (6a) pour le placement de la première partie de carter (6a) dans une situation parallèle à une plaque de base (21).

6. Capteur de position (1) avec corde d'arpentage selon la revendication 5, **caractérisé en ce que**
- une plate-forme (9b) présente des ouvertures circulaires de passage pour le vissage dans des trous borgnes filetés (22) du second couvercle frontal (8b) et
- l'autre plateforme (9a) présente des lumières (23) courbées autour de centre en forme d'arc pour le vissage des trous borgnes du premier couvercle frontal (8a).

7. Capteur de position avec corde d'arpentage
**caractérisé en ce que** sur la face interne du second couvercle frontal (8b), il est placé par la face ouverte un carter de ressort en forme de pot (19), dans lequel le ressort spiral plat (4) prend appui avec une extrémité traversée par l'arbre (7) logée dans cette dernière.

8. Capteur de position (1) avec corde d'arpentage selon l'une des revendications précédentes, **caractérisé en ce que** la corde d'arpentage (3) se compose de métal hautement résistant et présente une enveloppe en matière élastique en particulier une enveloppe en polyamide.

9. Capteur de position (1) avec corde d'arpentage selon la revendication 6, **caractérisé en ce que**
- le premier couvercle frontal (8a) présente une épaisseur axiale qui est supérieure à la longueur axiale nécessaire de la fente annulaire (14) antidéflagrante et la longueur des trous borgnes filetés (22) et
le second couvercle frontal (8b) est axialement plus épais que la longueur axiale du vissage (15) par rapport au manteau de carter tubulaire (13) en plus de l'extension axiale du joint torique (16) et également plus épais que la profondeur des trous borgnes (22) et plus épais que la longueur antidéflagrante de la fente annulaire par rapport à l'arbre (7) en plus de la longueur de ses roulement à bille (24).

10. Capteur de position (1) avec corde d'arpentage selon l'une des revendications précédentes **caractérisé en ce que** le capteur de position (1) présente un dispositif pour la transmission sans contact de signaux depuis le capteur de position et/ou de l'énergie électrique dans le capteur de position (1) à travers la paroi de carter fermée.

11. Procédé pour le montage du capteur de position (1) avec corde d'arpentage selon l'une des revendications 1 à 10,
**caractérisé**
- **en ce que** pour le montage de la première partie de carter résistance à la pression (6a), l'arbre (7) est enfilé de l'intérieur vers l'extérieur à travers tout d'abord un roulement à bille (24) et ensuite à travers le second couvercle frontal (8b) jusqu'à ce qu'un épaulement (7a) de l'arbre (7) vienne en butée,
- **en ce qu'**un carter de ressort (19) comportant le ressort spiral plat (4) est coiffé sur l'extrémité arrière libre de l'arbre (7) en assurant une connexion rigide à la tension entre le ressort spiral plat (4) et le ressort (7),
- **en ce qu'**une connexion rigide à la torsion, en particulier un vissage du carter de ressort (19) est établie avec le premier couvercle frontal (8a),
- **en ce que** le détecteur angulaire (5) est placé de manière rigide en torsion sur l'extrémité arrière de l'arbre (7) et prend appui par une bielle de réaction (25) vis-à-vis du carter de ressort (19) et
- **en ce que** le détecteur angulaire (5) est raccordé électriquement.

12. Procédé selon la revendication 11, **caractérisé en ce que**
- la première partie de carter (6a) résistante à la pression et à l'épreuve des explosions est montée avec les composants logés dedans et est fermée de manière résistante à la pression,
- est vissée en face frontale sur les plateformes (9a, b)
- et est amenée en direction axiale en position alignée et est éventuellement vissée sur une plaque de base (21),
- sur une plateforme (9b) est placée la seconde partie de carter résistante à la pression (6b) avec le tambour à câble (2) enroulé et disposé dedans,
- par une rotation relative des parties de carter (6a, 6b) le ressort spiral plat (4) est enfilé et
- la seconde partie de carter (6b) est vissée dans une position de précontrainte sur la première partie de carter résistante à la pression (6a).

13. Procédé pour le fonctionnement d'un capteur de position avec corde d'arpentage selon l'une des revendications 1 à 10
**caractérisé en ce que** les signaux émis par le détecteur angulaire (5) sont amenés sans contact vers l'extérieur à travers la paroi de carter en particulier par des ondes électromagnétiques et/ou
- l'énergie électrique nécessaire pour le fonctionnement du détecteur angulaire (5), en particulier pour l'électronique d'analyse de (12) est amenée an particulier au moyen d'ondes électromagnétiques de l'extérieur à travers les parois de carter fermées.
